**Europäisches Patentamt**

**European Patent Office**

**Office européen des brevets**

(19)

(11) **EP 0 987 645 A2**

(12) **EUROPEAN PATENT APPLICATION**

(43) Date of publication:
**22.03.2000 Bulletin 2000/12**

(51) Int Cl.$^7$: **G06F 17/60**

(21) Application number: **99307142.2**

(22) Date of filing: **09.09.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Nakisa, Ramin C**<br>**Little Chalfont, Buckinghamshire HP6 6QH (GB)** |
| (30) Priority: **14.09.1998 GB 9819934** | (74) Representative: **Cleary, Fidelma et al**<br>**International IP Department**<br>**NCR Limited**<br>**206 Marylebone Road**<br>**London NW1 6LY (GB)** |
| (71) Applicant: **NCR International, Inc.**<br>**Dayton, Ohio 45479 (US)** | |

(54) **Predicting a future value of a variable associated with an input data sequence**

(57)    The present invention relates to a method and apparatus for predicting the value at a future time of a variable associated with an input data sequence. Such a data sequence may be a sequence of data representing the financial transactions and personal data of a customer of a business such as a bank or a retail establishment and the variable may be the profitability of the customer to the business.

The invention includes a database for registering a plurality of reference data sequences, for example the data sequences of an established set of bank customers. Values of the input data sequence are matched to values of the reference data sequences according to a dynamic time warping algorithm to determine the distances between the input sequence and the reference sequences. A regression function is applied to derive a weighting for each reference sequence according to its distance from the input sequence. A partial prediction of the future value associated with the input sequence is made from each reference sequence. The future value is then predicted as the sum of the partial predictions weighted by the weightings.

**Description**

The present invention relates to a method and apparatus for predicting the value at a future time of a variable associated with an input data sequence. Such a data sequence may be a sequence of data representing the financial transactions and personal data of a customer of a business such as a bank or a retail establishment and the variable may be the profitability of the customer to the business.

Businesses need to know the value to them of individual customers who conduct business transactions. Such transactions take place over time and as a result a pattern of transactions can be observed in relation to each individual customer. The products and facilities which are offered by a business may cover a wide spectrum and each product may have its individual overhead costs of provision and profitability. For example, in a bank, the products and facilities on offer will include current and savings accounts, financial equity investment products, stock market investment management, insurance products and lending products such as home purchase and business loans. In addition customers will interact with the bank through personal contact at branches of the bank, telephone instructions and automated teller machine transactions.

An individual facility such as a current account has an overhead cost to a bank which depends upon the number and type of transactions which pass through the account and the balance within the account. The bank will be able to determine a cost to be assigned to each account transaction whether it is the processing of a cheque or a cash withdrawal from an automated teller machine. On the other hand, the bank can also determine any profit from the charging of interest when an account is in deficit or the use of funds when the account is in credit. An individual customer of the bank may have accepted other financial products such as a loan or an insurance product and the profitability of that customer will depend on the number, the type and the value of those products.

Some customers will be seen as more profitable than others because of the pattern of their financial relationship with the bank. A bank will be interested to know the lifetime value to the bank of an individual customer. This lifetime value will vary depending upon factors such as job occupation, salary, marital status, age, number of children and transaction behaviour. Whilst methods currently exist to calculate the value of a customer based upon past customer transactions, there is a need to be able to predict the profitability ofa customer by a projection into the future.

It is an aim of the present invention to make a prediction from an input data sequence of a future value of a variable, such as profitability, associated with the input data sequence in the form of a probability distribution over the values of that variable.

According to the present invention, there is now provided a method of making a prediction from an input data sequence of a future value of a variable associated with the input data sequence, the method comprising the steps of;

registering a plurality of reference data sequences,
matching values of the input data sequence to values of the reference data sequences according to a dynamic time warping algorithm to determine both the endpoint in time at which the alignement between the input sequence and each reference sequence ends, and the distances between the input sequence and the reference sequences over the alignment in time,
applying a regression function to derive a weighting for each reference sequence according to its distance from the input sequence,
forming a partial prediction of the said future value from each reference sequence,
and predicting the said future value as the sum of the partial predictions weighted by the said weightings.

Further according to the present invention, there is provided apparatus for making a prediction from an input data sequence of a future value of a variable associated with the input data sequence, the apparatus comprising;

means for registering a plurality of reference data sequences,
matching means for matching values of the input data sequence to values of the reference data sequences according to a dynamic time warping algorithm to determine both the endpoint in time at which the alignment between the input sequence and the reference each reference sequence ends, and the distances between the input sequence and the reference sequences over the alignment in time,
means for applying a regression function to derive a weighting for each reference sequence according to its distance from the input sequence,
means for forming a partial prediction of the said future value from each reference sequence, and
predicting means for predicting the said future value as the sum of the partial predictions weighted by the said weightings.

The invention will now be further described, by way of example, with reference to the accompanying drawings in which;

Figure 1 shows database relating to a set of customers of a bank,

Figure 2 is a graphical representation of the profitability of individuals included in the set of customers of Figure 1,

Figure 3, shows data processing apparatus, according to the invention, for predicting a future value of profitability,

Figure 4 shows a block diagram of the operating steps in a method, according to the present invention, which employs the apparatus of Figure 3,

Figure 5 shows a block diagram of further operating steps, according to the present invention, for removing redundancy from data used in performing the steps of Figure 4, and

Figure 6 shows a block diagram of yet further operating steps, according to the present invention, for generating posterior predictive probability distributions for predictions using the steps of Figure 4.

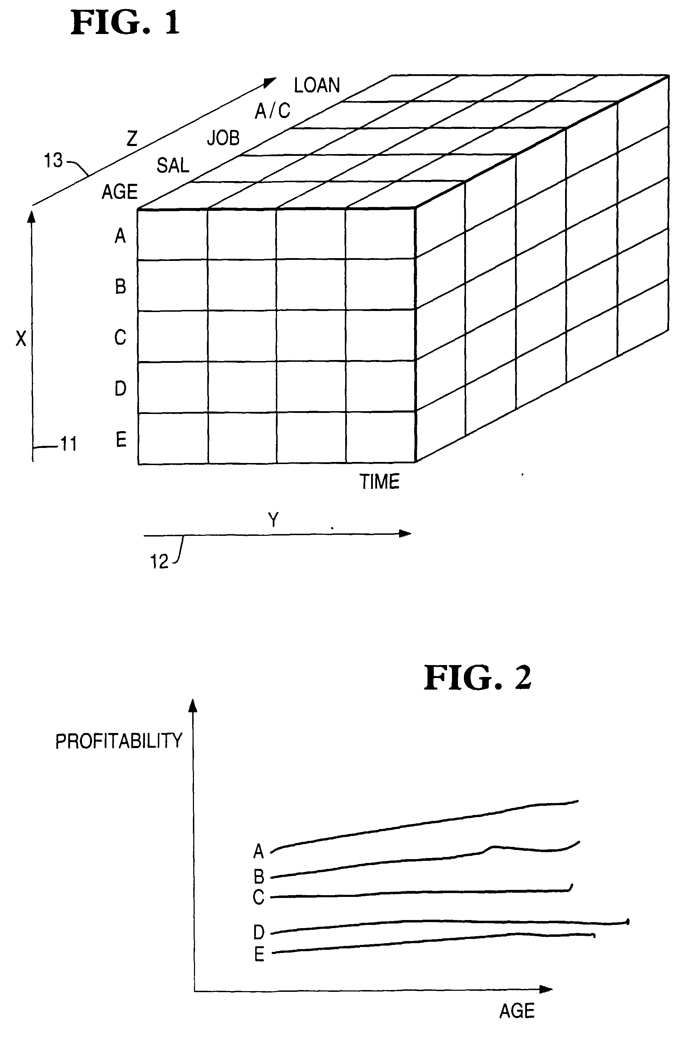

In Figure 1, a database of information 10 concerns a set of customers of an enterprise such as a bank. The database 10 is shown in three dimensions arranged along an X axis 11, a Y axis 12 and a Z axis 13. The X axis 11 is subdivided to include fields for each of five customers A to E although it will be understood that in practice the database would have fields along the X axis for a multiplicity of customers far in excess of five. Each customer has attributes which include personal information such as age, type of job and salary and financial attributes such as the number and types of bank accounts, including investment accounts, deposit and current accounts and loans. The customer attributes are arranged along the Z axis 13. Whilst only five fields of attributes for each customer are illustrated in Figure 1, it will be understood that these fields are illustrative only and that, in practice, provision would be made in the database to include a number of attributes for each customer far in excess of five.

The Y axis 12 of the database 10 is a time axis. Each customer attribute is recorded for each of a regular succession of time intervals. The time intervals can conveniently be intervals of one month although intervals other than monthly intervals may be used. A portion of the entry for a customer A is illustrated in the following table A. The table A includes fields relating to age, salary and transactions in a current account. A table B illustrates the corresponding fields in the entry for a customer B.

Table A

| Month | Salary | Age | ATM Transact | Electric Bill | Visa Bill |
|-------|--------|--------|--------------|---------------|-----------|
| 1 | 43 000 | 43.083 | 4 | 23.43 | 209.34 |
| 2 | 43 000 | 43.167 | 7 | 21.35 | 117.62 |
| 3 | 43 000 | 43.25 | 3 | 41.20 | 430.22 |
| 4 | 44 200 | 43.333 | 4 | 53.29 | 83.14 |
| 5 | 44 200 | 43.417 | 6 | 48.21 | 11.29 |

Table B

| Month | Salary | Age | ATM Transact | Electric Bill | Visa Bill |
|-------|--------|--------|--------------|---------------|-----------|
| 1 | 21 000 | 23.083 | 14 | 0 | 12.34 |
| 2 | 21 000 | 23.167 | 17 | 0 | 17.62 |
| 3 | 21 000 | 23.25 | 13 | 0 | 30.22 |
| 4 | 21 200 | 23.333 | 14 | 0 | 3.14 |
| 5 | 21 200 | 23.417 | 16 | 0 | 1.29 |

The tables A and B above are illustrative of five fields along the Z axis of the database 10 in Figure 1 to show the time progression on a monthly basis of salary, age, number of Automated Teller Machine transactions, payments of electricity and payments of a credit card bill. Other fields would relate for example to payments of interest by the customer on a loan account or payments of interest to a customer on a deposit account.

The worth or profitability of an individual customer can be calculated by known methods based on the financial transaction data of the customer through the accounts held with the bank. The profitability of the individual customers A to E in the database 10 of Figure 1 can thus all be calculated individually using the known methods. The profitability of a customer is a variable with time which is associated with the sequence of data concerning that individual customer.

It would benefit a bank to be able to predict the future profitability of an individual customer.

In Figure 2, the profitability of the individual customers A to E is shown where each customer is represented as an individual graphical plot of profitability which varies with age. The graphical plots are aligned in time so that the profitability of each customer can be compared with that of the others, although the lengths of the plots are not all the same because of the different lifespans represented in Figure 2. The graphical plot of profitability for an individual customer is representative of the sequence of data in the database 10 of Figure 1. The profitability of each customer is stored as a continuous sequence of values within the database 10.

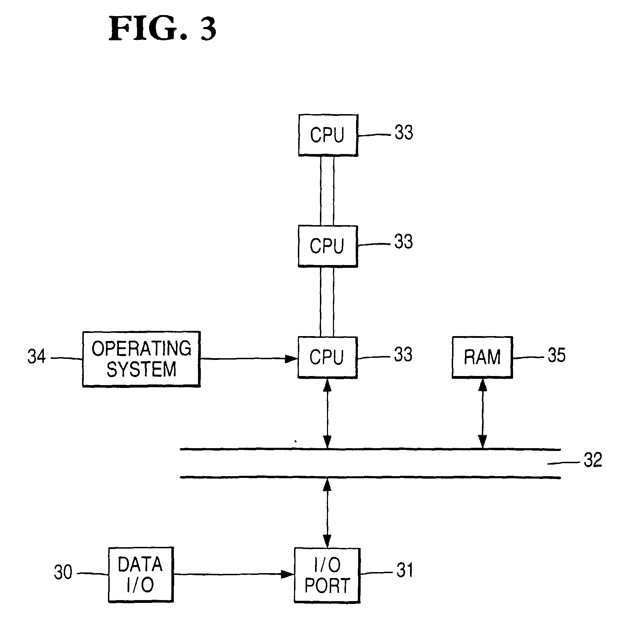

In Figure 3, a data processing apparatus is shown which provides a means for receiving the data in the data base 10 of Figure 1. The data is entered by means of an I/O device 30 through an I/O port 31 for entry to a data bus 32. A group of central processing units (CPU) 33 are controlled by an operating system 34 to control the entry of data onto the data bus. A random access memory 35 is connected to the I/O bus 32 to receive and store data supplied by the bus 32.

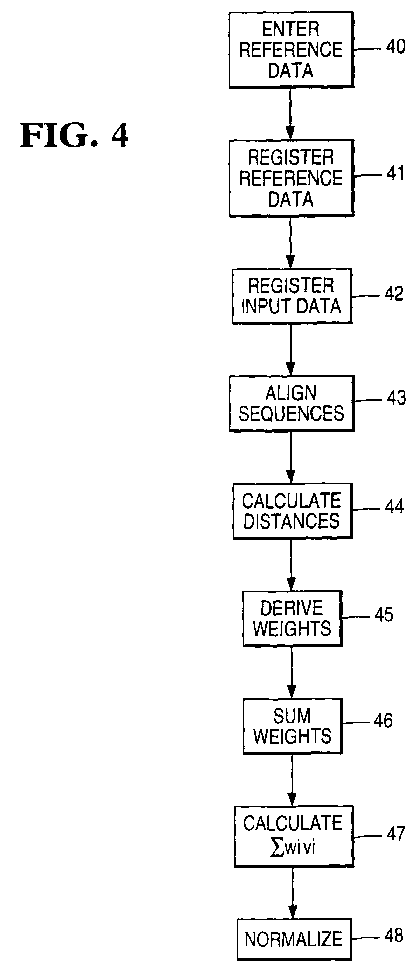

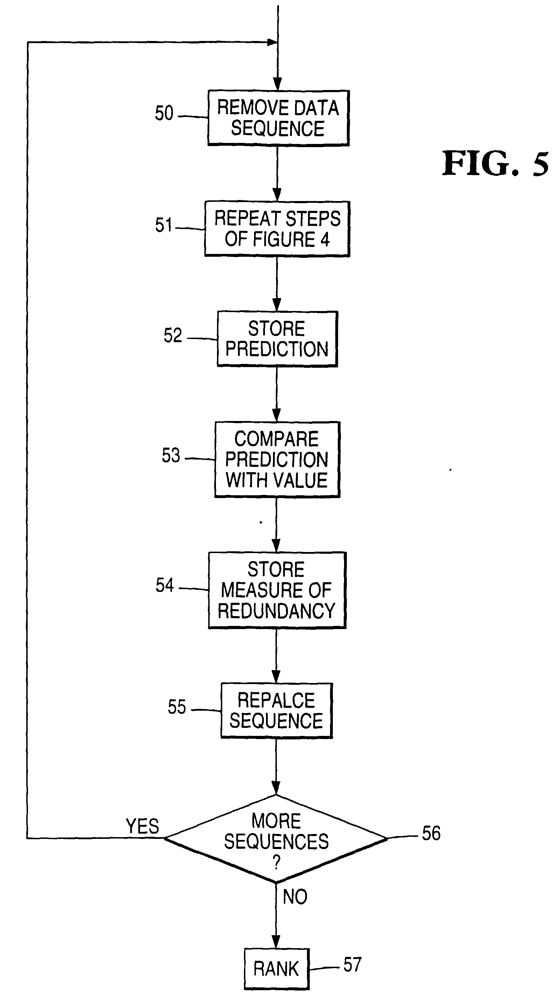

In response to the entry, by means of the data I/O device 30, of the data representing the information in the different fields of the database 10 of Figure 1, the parallel operating CPUs 33 are programmed to enter the data into the memory 35. The data in the memory 35 is a set of reference data sequences which is available to be processed in a series of processing operations as represented in the block flow diagram of Figure 4.

In Figure 4, the entry of the sequences of data from the fields of the database 10 through the I/O device 30 is shown as step 40 and the storage of the data in the memory 35 is shown as step 41. Following the data registration step 41, a data sequence representing information concerning a new customer is entered in step 42 by way of the I/O device 30 and registered in the memory 35. The CPU 33 is programmed to match data in the new customer data sequence to data of the reference data sequences according to a time warping algorithm as shown in step 43. Dynamic time warping is a known method of non-linear time alignment which allows signals or data sequences to be stretched and shrunk in time so as to maximise their alignment. Once aligned, the distance between the sequences is determined in step 44 by the amount of time warping. In the present invention, the distances between the new customer data sequence and the reference data sequences are based on the differences in transactional data summed over the successive monthly time periods of the database 10.

The simplest measure of distance is Euclidean distance. Thus for salaries of 43 000 and 23 000, the distance is the square root of 43 000 - 23 000. If the single time frame data for two sequences x and x' is being compared, each with f fields, the distance for each pair of frames would be;

$$d_{frame}(x,x') = \sqrt{\Sigma_f(x_f - x_f')}^2 \qquad (1)$$

For categorical(nominal) data, where no numerical data exists, for example in the case of a category such as occupation, the distance could either be 1 for identity and 0 otherwise. Alternatively, a matrix of category distances could be created which relates the distances between different categories. Thus in the case of an occupation matrix, the distance between banker and banker is 0.0, the distance between banker and accountant is 0.2, the distance between banker and street sweeper is 10.0 etc. This nominal field comparison can then be inserted into the equation (1) above by changing the term $(x_f - x_f')^2$ into the term $(m[x_f,x_f'])^2$ where m is the distance matrix entry for the two nominal variables.

Following the calculation of distances in step 44, the CPU 33 is programmed to use a local linear regression model to perform regression in which a weighting is assigned for each reference data sequence according to its distance from the new customer data sequence. The weight of the ith example of the set of reference data sequences is $w_i(x_j, x_i)$ where $x_j$ represents the set of data in the new customer data sequence and $x_i$ represents the set of data in the ith reference data sequence.

In the next step 46, the weights calculated in the step 44 are summed over all the examples in the set of reference data sequences. The sum is a normalising term for use in a subsequent step of operation as will be explained.

A projection at a future time t of the profitability value of the new customer is made in step 47. To do this, the profitability values of the reference data sequences are retrieved from the memory 35. The projection for the new customer is then made from the profitability values of each of the reference sequences multiplied by their weightings. The projection is represented by the expression :-

$$_i\Sigma\, w_i(x_j,x_i)v_i(t_i + t)$$

where $v_i$ is the profitability value of the ith reference data sequence, $t_i$ is the time in the ith reference sequence that corresponds with the end of the new customer sequence and t is the time at which the projection of the profitability of the new customer is to be made relative to the end of the new customer sequence.

In the step 48, the projection made in step 47 is normalised. The normalising step consists of dividing the projection by the sum derived in the step 46. The result is a prediction of the value for the profitability value $v_j$ of the new customer j with data $x_j$ at a future time t which is is given by the following equation;

$$v_j(x_j,t) = \frac{{}_i\Sigma w_i(x_j,x_i)v_i(t_i + t)}{{}_i\Sigma\ w_i(x_j,x_i)}$$

The weighting function can be any polynomial function of an order of one or more than one. Thus the weighting function can be a Gaussian function such that $w_i(x_j,x_i) = \exp(-c \times dist^2(x_j,x_i))$ where c is a constant and $dist^2(x_j,x_i)$ is the square of the distance between the reference example $x_i$ and the new customer $x_j$. Another possible weighting function would be cubic such that;

$$w_i(x_j,x_i) = c_0 + c_1 dist(x_j,x_i) + c_2 dist^2(x_j,x_i) + c_3 dist^3(x_j,x_i)$$

and $c_0$, $c_1$, $c_2$, and $c_3$ are constants.

Not all of the reference data sequences stored in the memory 35 are equally informative in making a prediction of profitability for the new customer. In large data sets it is likely that there will be redundant examples which, by reason of their similarity to neighbouring examples, add no new or useful information for the purposes of prediction. Furthermore, if too much data is available, the prediction process is slow and expensive.

In Figure 5, are shown the steps used to calculate the redundancy or uninformativeness of the reference data sequences stored in the memory 35. A comparison is made between the actual known value for an individual and the value that would have been predicted on the assumption that the actual value is not available. If the data is redundant, the difference between the predicted and the observed values will be small.

In a first step, 50 a reference data sequence to be tested for redundancy is isolated. In step 51 the operating steps shown in Figure 4 are completed using the stored reference data sequences to predict the value of the isolated sequence. In a third step 52, the prediction is stored for future reference. In step 53, the prediction stored in step 52 is compared with the actual known value for the isolated sequence and the degree of redundancy resulting from the comparison is stored in step 54. In step 55 the isolated data sequence is replaced in the memory. A test is determined in step 56 to check whether the data sequence removed in step 50 is the last in the store 35. If the result is NO the steps 50 to 55 are repeated but a different reference data sequence is removed from the prediction for each repeated prediction.

Once all of the reference sequences have been checked for their degree of redundancy, the test in step 56 will lead to step 57 in which the values of redundancy stored in the step 55 of each iteration are ranked. Those data sequences having redundancy values which fall below a predetermined threshold are removed from the set of reference sequences.

If the known value for an example i out of the set of data sequences is $V_i$, then the measure of redundancy $r_i$ of that example is given by;

$$r_i = \left| V_i - v_i \right| = \left| V_i - \frac{{}_{j \neq i}\sum w_j v_j}{{}_j\sum w_j} \right|$$

The examples of data sequences that are retained in the memory work well for the purposes of prediction because they retain much of the information in their spatial distribution, but take less time to process than the full data set.

The prediction which is produced by the series of steps shown in Figure 4 is determined by the weighting function that is used in the prediction. Any weighting function may be used including by way of example a Gaussian function or a cubic function. Instead of using a single weighting function to make a single prediction, multiple predictions using different weighting functions can be sampled to calculate posterior predictive distributions.

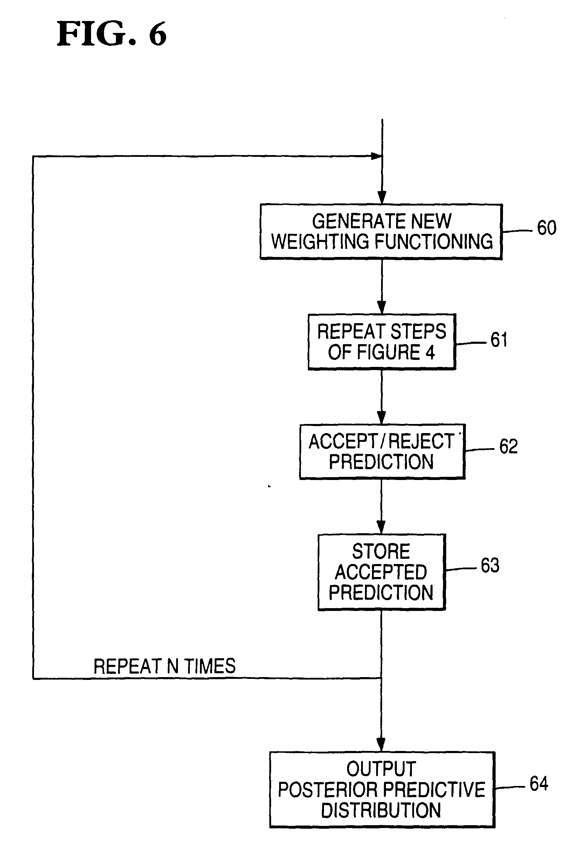

In Figure 6, in step 60, a random weighting function is generated. The random weighting function may be made random in respect of the value of the constant c in the case of the Gaussian weighting function referred to above. Alternatively, the weighting function may be made random in respect of the values of the constants $c_0$, $c_1$, $c_2$, and $c_3$ in the case of the cubic weighting function referred to above.

In step 61, the steps of Figure 4 are undertaken to form a prediction using the randomly generated weighting function from step 60. The resulting prediction is accepted or rejected using a known sampling method. The known sampling method is Markov Chain Monte Carlo (MCMC) sampling. Each accepted prediction is stored in step 63. The steps 60 to 63 are repeated a multiplicity of times to generate a probability distribution of predictions. An output posterior predicitve distribution is made in step 64.

The MCMC sampling requires a likelihood function. The likelihood of a particular set of parameters P is calculated by working out how well they predict the reference data sequences. This is done by taking a reference data sequence from memory, disregarding the latter half of the sequence, making a prediction for the latter half of the reference sequence from the current parameters P and all the other reference data sequences and calculating the distances between the actual and predicted sequence. The individual likelihood
= exp( - distance^2).prior(P) for this sequence is stored.

The process is repeated for each of the other reference data sequences so as to calculate the individual likelihoods for each. The total likelihood is the product of all the individual likelihoods.

The invention can be used to compare different individuals so as to rank them by trading off risk against potential profit. Thus the invention can be used to calculate the probability that an individual will make a loss as almost zero. The model may indicate that the lifetime profit predictive distribution for this individual is peaked at a particular value such as $10 000 very tightly and predict that there is a 95% chance that the lifetime profit of this individual will be between $9 000 and $11 000.

**Claims**

1. A method of making a prediction from an input data sequence of a future value of a variable associated with the input data sequence, the method comprising the steps of;

   registering a plurality of reference data sequences,
   matching values of the input data sequence to values of the reference data sequences according to a dynamic time warping algorithm to determine both the endpoint in time at which the alignment between the input sequence and each reference sequence ends, and the distances between the input sequence and the reference sequences over the alignment in time,
   applying a regression function to derive a weighting for each reference sequence according to its distance from the input sequence,
   forming a partial prediction of the said future value from each reference sequence,
   and predicting the said future value as the sum of the partial predictions weighted by the said weightings.

2. A method as claimed in claim 1, wherein the input and reference data sequences comprise financial transaction data and the said variable represents customer profitability.

3. A method as claimed in claim 1 or 2, wherein the step of applying a regression function to derive a weighting for each reference sequence according to its distance from the input sequence applies a regression function which is Gaussian.

4. A method as claimed in claim 1 or 2, wherein the step of applying a regression function to derive a weighting for each reference sequence according to its distance from the input sequence applies a regression function which is a polynomial function of an order of one or more than one.

5. A method as claimed in claim 1, 2, 3 or 4, comprising the further steps of;

   removing one of the reference data sequences from consideration,
   repeating the steps of the method to predict the value of the removed reference data sequence, and
   measuring the redundancy of the removed reference data sequence by comparing the known value of the removed reference data sequence with the prediction thereof.

6. A method as claimed in claim 5 in which the steps applied to measuring the redundancy of the removed reference data sequence are repeated so as to measure the redundancy of each of the reference data sequences.

**7.** A method as claimed in any one of claims 1 to 4, wherein the steps of the method are repeated through a plurality of iterations and the method further comprises the steps of introducing a random variation into the regression function for each iteration of the method, and sampling the prediction produced by each iteration of the method.

**8.** Apparatus for making a prediction from an input data sequence of a future value of a variable associated with the input data sequence, the apparatus comprising;

> means for registering a plurality of reference data sequences,
> matching means for matching values of the input data sequence to values of the reference data sequences according to a dynamic time warping algorithm to determine both the endpoint in time at which the alignment between the input sequence and each reference sequence ends, and the distances between the input sequence and the reference sequences over the alignment in time,
> means for applying a regression function to derive a weighting for each reference sequence according to its distance from the input sequence,
> means for forming a partial prediction of the said future value from each reference sequence, and
> predicting means for predicting the said future value as the sum of the partial predictions weighted by the said weightings.

**9.** Apparatus as claimed in claim 8, wherein the means for applying a regression function to derive a weighting for each reference sequence according to its distance from the input sequence is adapted to apply a regression function which is Gaussian.

**10.** Apparatus as claimed in claim 8, wherein the means for applying a regression function to derive a weighting for each reference sequence according to its distance from the input sequence is adapted to apply a regression function which is a polynomial function of an order of one or more than one.

**11.** Apparatus as claimed in claim 8, 9 or 10, further comprising;

> means to remove one of the reference data sequences from consideration,
> means to repeat a prediction with the remaining reference data sequences to form a prediction of the value of the removed reference data sequence, and
> means to measure the redundancy of the removed reference data sequence by comparing the known value of the removed reference data sequence with the prediction thereof.

**12.** Apparatus as claimed in claim 8, further comprising means to cause the apparatus to complete a plurality of iterations of operation so as to produce a prediction for each iteration, means to introduce a random variation into the regression function for each iteration of the apparatus, and sampling means for sampling the predictions.

# FIG. 1

# FIG. 2

# FIG. 3

**FIG. 4**

```
┌──────────────┐
│    ENTER     │
│  REFERENCE   │── 40
│     DATA     │
└──────────────┘
       │
       ▼
┌──────────────┐
│   REGISTER   │
│  REFERENCE   │── 41
│     DATA     │
└──────────────┘
       │
       ▼
┌──────────────┐
│   REGISTER   │── 42
│  INPUT DATA  │
└──────────────┘
       │
       ▼
┌──────────────┐
│    ALIGN     │── 43
│  SEQUENCES   │
└──────────────┘
       │
       ▼
┌──────────────┐
│  CALCULATE   │── 44
│  DISTANCES   │
└──────────────┘
       │
       ▼
┌──────────────┐
│   DERIVE     │── 45
│  WEIGHTS     │
└──────────────┘
       │
       ▼
┌──────────────┐
│    SUM       │── 46
│  WEIGHTS     │
└──────────────┘
       │
       ▼
┌──────────────┐
│  CALCULATE   │── 47
│  ∑wi vi      │
└──────────────┘
       │
       ▼
┌──────────────┐
│  NORMALIZE   │── 48
└──────────────┘
```

**FIG. 5**

50 — REMOVE DATA SEQUENCE

51 — REPEAT STEPS OF FIGURE 4

52 — STORE PREDICTION

53 — COMPARE PREDICTION WITH VALUE

54 — STORE MEASURE OF REDUNDANCY

55 — REPALCE SEQUENCE

YES — MORE SEQUENCES ? — 56

NO

RANK — 57

# FIG. 6

GENERATE NEW WEIGHTING FUNCTIONING — 60

REPEAT STEPS OF FIGURE 4 — 61

ACCEPT / REJECT PREDICTION — 62

STORE ACCEPTED PREDICTION — 63

REPEAT N TIMES

OUTPUT POSTERIOR PREDICTIVE DISTRIBUTION — 64